**Europäisches Patentamt**

**European Patent Office**

**Office européen des brevets**

(19)

(11) Veröffentlichungsnummer: **0 236 818 B1**

# EUROPÄISCHE PATENTSCHRIFT

(12)

(45) Veröffentlichungstag der Patentschrift: **29.04.92**

(51) Int. Cl.5: **H04L 12/26**

(21) Anmeldenummer: **87102396.6**

(22) Anmeldetag: **19.02.87**

(54) **Verfahren und Schaltungsanordnung zum Überwachen von mit einer Datenvermittlungs- bzw. Datenübertragungseinrichtung verbundenen Anschlussleitungen.**

(30) Priorität: **14.03.86 DE 3608647**

(43) Veröffentlichungstag der Anmeldung:
**16.09.87 Patentblatt 87/38**

(45) Bekanntmachung des Hinweises auf die
Patenterteilung:
**29.04.92 Patentblatt 92/18**

(84) Benannte Vertragsstaaten:
**AT DE IT**

(56) Entgegenhaltungen:
**CH-A- 474 194**
**DE-A- 2 748 782**
**DE-A- 3 322 472**
**DE-B- 1 101 490**

**IBM TECHNICAL DISCLOSURE BULLETIN,**
**Band 17, Nr. 1, Juni 1974, Seiten 141-143,**
**New York, US; S.R. BLACKMORE:**
**"Asynchronous frequency monitor/analyzer"**

**SIEMENS ZEITSCHRIFT, Band 51, Nr. 2, 1977,**
**Seiten 82-87, Erlangen, DE; E. MAIR et al.:**
**"Struktur des Siemens-Systems EDS"**

(73) Patentinhaber: **SIEMENS AKTIENGESELL-**
**SCHAFT**
**Wittelsbacherplatz 2**
**W-8000 München 2(DE)**

(72) Erfinder: **Flüter, Heribert, Dipl.-Math.**
**Innerkoflerstrasse 16**
**W-8000 München 70(DE)**

EP 0 236 818 B1

## Beschreibung

Die Erfindung betrifft ein Verfahren und eine Schaltungsanordnung zum Überwachen von mit einer Datenvermittlungs- bzw. Datenübertragungseinrichtung verbundenen Anschlußleitungen hinsichtlich des Auftretens von bei einer Übertragung von Datensignalen als zusätzliche Polaritätswechsel sich auswirkenden Störungen in der betreffenden Datenvermittlungs- bzw. Datenübertragungseinrichtung, wobei das Überwachen in periodischen Zeitabständen während einer Zeitspanne vorgegebener Dauer leitungsindividuell erfolgt und bei Vorliegen von Störungen die jeweilige Anschlußleitung in einen den Betrieb der Datenvermittlungs- bzw. Datenübertragungseinrichtung nicht störenden Zustand überführt wird.

Ein derartiges Verfahren ist bereits aus DE-B-1 101 490 bekannt. Bei diesem bekannten Verfahren sind in Telegrafieempfangsschaltungen, d.h. in dezentralen Einrichtungen einer Vermittlungseinrichtung, Anordnungen zum Feststellen von Telegrafiezeichen überlagerten Störungen vorgesehen. Dabei wird davon ausgegangen, daß durch derartige Störungen der zeitliche Abstand der Polaritätsänderungen eines empfangenen Telegrafiezeichens die Dauer eines ungestörten Telegrafieschrittes wesentlich unterschreitet. Die genannten Anordnungen sind dabei so ausgebildet, daß eine Auswertung von Telegrafieschritten durch eine nachfolgende Einrichtung, d.h. z. B. durch eine Vermittlungseinrichtung, nur dann unterbunden wird, wenn derartige Unterschreitungen eines bestimmten Mindestabstandes nicht nur vereinzelt in großen zeitlichen Abständen, sondern mit größerer Häufigkeit auftreten. Eine solche Anordnung weist dafür eine Auswerteeinrichtung auf, um zunächst Störungen festzustellen, die zu fälschlichen kurzen Polaritätsänderungen der empfangenen Telegrafiezeichen führen. Lediglich bei Auftreten derartiger Störungen wird eine nachgeschaltete Bewertungseinrichtung aktiviert, welche nur dann eine Auswertung empfangener Telegrafiezeichen in nachfolgenden Einrichtungen verhindert, wenn die Häufigkeit des Auftretens von Störungen einen bestimmten Schwellwert überschreitet. Der Schwellwert ist dabei durch den Ladezustand eines RC-Gliedes festgelegt.

Außerdem ist bereits ein Verfahren für die Überwachung von Zubringerleitungen in einer Datenvermittlungsanlage bekannt (DE-A-3 322 472). Bei diesem ist für die Überwachung von mit einer gesonderten Koppeleinrichtung einer Datenvermittlungsanlage verbundenen Zubringerleitungen hinsichtlich des Auftretens von Übertragungsfehlern vorgesehen, daß bei Ermittlung eines Übertragungsfehlers auf einer Zubringerleitung durch die Koppeleinrichtung ein diese Zubringerleitung bezeichnendes Fehleranzeigesignal an die zugehörige Datenvermittlungsanlage abgegeben wird. In dieser Datenvermittlungsanlage ist ein sogenannter Verbindungs-Überwachungsspeicher mit den Zubringerleitungen individuell zugeordneten Speicherplätzen vorhanden, in welchem von der Koppeleinrichtung abgegebene Fehleranzeigesignale leitungsindividuell gespeichert werden. Durch Ablauf einer in der Datenvermittlungsanlage vorgesehenen Überwachungsroutine werden die einzelnen Speicherplätze des Verbindungs-Überwachungsspeichers auf ihren Zustand abgefragt und dabei Verbindungen für diejenigen Zubringerleitungen ausgelöst, für welche in dem Verbindungs-Überwachungsspeicher ein Fehleranzeigesignal gespeichert ist.

Darüber hinaus sind bereits Datenvermittlungsanlagen bekannt, die auf mit ihnen verbundenen Anschlußleitungen auftretende Datensignale polaritätswechselweise übertragen ("Siemens-Zeitschrift", 51 (1977), Heft 2, Seiten 82 bis 87). Bei dieser Übertragungsart, bei der nur die in den Datensignalen auftretenden Zustandsänderungen, d.h. die Polaritätswechsel, weitergeleitet werden, können den auf den Anschlußleitungen auftretenden Datensignalen Störungen überlagert sein, die sich als zusätzliche Polaritätswechsel auswirken und somit von der mit den Anschlußleitungen verbundenen Datenvermittlungsanlage als weiterzuleitende Informationen behandelt werden. Dies führt zumindest zu einer erhöhten Belastung der betreffenden Datenvermittlungsanlage. Es kann aber auch für den Fall, daß den zu übertragenden Datensignalen hochfrequente Störungen überlagert sind, dazu führen, daß die betreffende Datenvermittlungsanlage durch eine ständige Bearbeitung der den hochfrequenten Störungen entsprechenden Polaritätswechsel für die Bearbeitung von den eigentlich zu übertragenden Datensignalen zugehörigen Polaritätswechseln blockiert ist.

Es ist nun Aufgabe der vorliegenden Erfindung, einen Weg zu zeigen, wie mit einem geringen Steuerungsaufwand Anschlußleitungen hinsichtlich des Auftretens von als Polaritätswechsel sich auswirkenden Störungen in einer mit den Anschlußleitungen verbundenen Datenvermittlungs- bzw. Datenübertragungseinrichtung überwacht werden können.

Gelöst wird die vorstehend aufgezeigte Aufgabe bei einem Verfahren der eingangs genannten Art erfindungsgemäß dadurch, daß für eine innerhalb der Datenvermittlungs- bzw. Datenübertragungseinrichtung vorgesehene polaritätswechselweise Übertragung von auf den Anschlußleitungen auftretenden Datensignalen jedem der auf den Anschlußleitungen auftretenden Polaritätswechsel ein dessen Richtung angebendes Richtungssignal und ein die jeweilige Anschlußleitung bezeichnendes Adressensignal zugeordnet wird,

daß die Richtungssignale zusammen mit ihren zugehörigen Adressensignalen vor ihrer Weiterleitung durch die Datenvermittlungs- bzw. Datenübertragungseinrichtung zunächst in ein zentrales Wartefeld vorgegebener Größer übernommen werden, dessen Inhalt jeweils während zyklisch wiederholt auftretender Bearbeitungsintervalle abgearbeitet wird,

daß innerhalb eines Bearbeitungsintervalls die Anzahl der in dem Wartefeld befindlichen Richtungssignale anhand der diesen beigefügten Adressensignale leitungsindividuell ermittelt wird,

daß für jede der Anschlußleitungen eine maximale Anzahl von Richtungssignalen festgelegt ist, die der maximal möglichen Anzahl von Polaritätswechseln während einer einem Bearbeitungsintervall entsprechenden Zeitspanne bei einer störungsfreien Übertragung von Datensignalen mit der auf der jeweiligen Anschlußleitung benutzten Übertragungsgeschwindigkeit entspricht,

und daß bei Überschreiten der für die jeweilige Anschlußleitung festgelegten maximalen Anzahl von Richtungssignalen durch die gerade für die jeweilige Anschlußleitung ermittelte Anzahl von Richtungssignalen die Aufnahme weiterer, der jeweiligen Anschlußleitung zugeordneter Richtungssignale verhindert wird.

Die Erfindung bringt den Vorteil mit sich, daß in der Datenvermittlungs- bzw. Datenübertragungseinrichtung in vorgegebenen Zeitabständen die Anzahl der auf den einzelnen Anschlußleitungen pro Zeiteinheit auftretenden Polaritätswechsel einer Plausibilitätsprüfung unterzogen werden. Auf diese Weise können auf einer der Anschlußleitungen auftretende Störungen, die zu einer unplausiblen Anzahl von Polaritätswechseln führen, rechtzeitig in der Datenvermittlungs bzw. Datenübertragungseinrichtung erkannt und diesen Störungen entsprechende Maßnahmen eingeleitet werden, die die obengenannten negativen Auswirkungen dieser Störungen auf die Datenvermittlungs- bzw. Datenübertragungseinrichtung verhindern.

Eine vorteilhafte Weiterbildung des Verfahrens gemäß der vorliegenden Erfindung sowie eine Schaltungsanordnung zu dessen Durchführung ergeben sich aus den Patentansprüchen 2 und 3.

Im folgenden wird die Erfindung am Beispiel einer in einer Zeichnung ausschnittweise dargestellten Daten- und Fernschreibvermittlungsanlage näher erläutert.

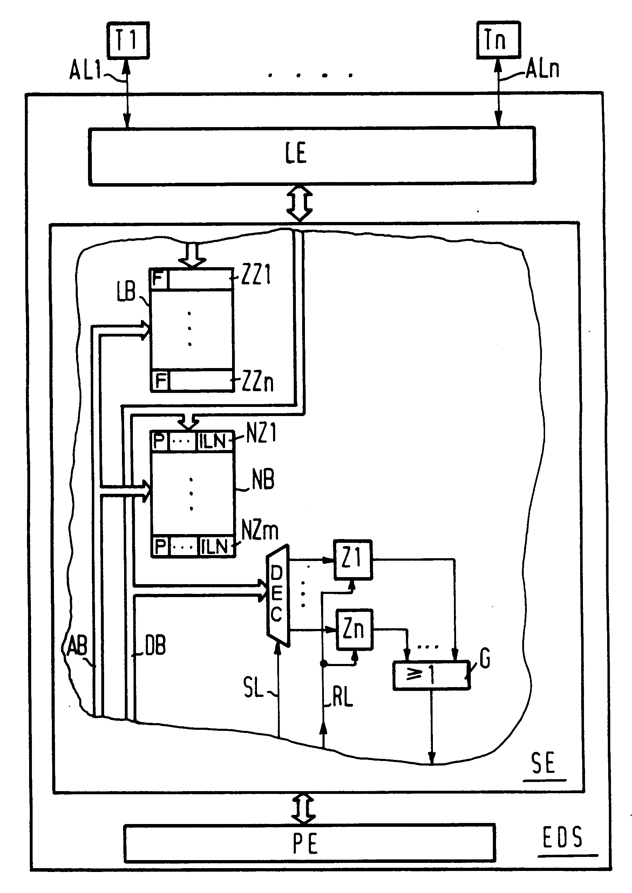

In der Zeichnung ist ausschnittweise eine beispielsweise in der "Siemens-Zeitschrift", 51, (1977), Heft 2, Seiten 82 bis 87 bereits beschriebene Daten- und Fernschreibvermittlungsanlage EDS wiedergegeben. Mit dieser Daten- und Fernschreibvermittlungsanlage ist eine Vielzahl von Anschlußleitungen AL1 bis ALn verbunden. Bei diesen Anschlußleitungen kann es sich sowohl um mit Teilnehmereinrichtungen verbundene Teilnehmerleitungen als auch um Verbindungsleitungen handeln, über die die dargestellte Daten- und Fernschreibvermittlungsanlage mit weiteren Daten- und Fernschreibvermittlungsanlagen in Verbindung stehen kann. In der Zeichnung sind lediglich als Beispiel Teilnehmerleitungen dargestellt, an die mit T1 bis Tn bezeichnete Teilnehmereinrichtungen angeschlossen sind.

Dabei kann es sich bei diesen Teilnehmereinrichtungen wahlweise um im synchronen oder asynchronen Betrieb arbeitende Einrichtungen handeln.

Die genannten Anschlußleitungen AL1 bis ALn stehen mit einer Leitungsanschlußeinheit LE der Daten- und Fernschreibvermittlungsanlage in Verbindung. Diese Leitungsanschlußeinheit dient u. a. zur Steuerung des Signalaustausches zwischen den Anschlußleitungen und der eigentlichen Verarbeitungseinheit der Daten- und Fernschreibvermittlungsanlage. Diese Verarbeitungseinheit besteht im wesentlichen aus der in der Zeichnung dargestellten, mit SE bezeichneten Speichereinheit und der mit PE bezeichneten Programmsteuereinheit.

Von der genannten Speichereinheit SE ist in der Zeichnung der Schaltungsteil dargestellt, der zur Überwachung der Anschlußleitungen hinsichtlich des Auftretens von als Polaritätswechsel sich auswirkenden Störungen dient. Dieser Schaltungsteil weist einen Datenspeicher LB mit den einzelnen Anschlußleitungen AL1 bis ALn individuell zugeordneten Speicherzellen auf. Diese Speicherzellen sind mit ZZ1 bis ZZn bezeichnet. Die Ziffern 1 bis n geben dabei die Zugehörigkeit zu den mit den gleichen Ziffern versehenen Anschlußleitungen an. In jeder dieser Speicherzellen ist u.a. ein mit F bezeichnetes Freigabesignal, beispielsweise in Form eines bestimmten Binärzustandes eines Datenbits, einschreibbar. Das Vorhandensein dieses Freigabesignals zeigt an, daß den auf den einzelnen Anschlußleitungen auftretenden Polaritätswechseln entsprechende Signale vor einer Verarbeitung durch die Daten- und Fernschreibvermittlungsanlage EDS zunächst in ein zentrales Wartefeld vorgegebener Größe übernommen werden, dessen jeweiliger Inhalt jeweils während zyklisch wiederholt auftretender Bearbeitungsintervalle abgearbeitet wird.

Das genannte Wartefeld ist durch einen auch als Notizblock bezeichneten Schreib-/Lesespeicher NB gebildet. Dieser Notizblock weist eine der Größe des zu bildenden Wartefeldes entsprechende Anzahl von Speicherzellen auf, die in der Zeichnung mit NZ1 bis NZm bezeichnet sind. In diese Speicherzellen sind die genannten, den zu übertragenden Polaritätswechseln entsprechenden Signale einschreibbar. Jedes dieser Signale besteht dabei u. a. aus einem die Richtung des jeweiligen Polaritätswechsels angebenden Richtungssignal P und einem diesem zugehörigen Adressensignal ILN, welches diejenige Anschlußleitung bezeichnet, von der zuvor der jeweilige Polaritätswechsel aufgenommen worden ist. Ein solches Richtungssignal kann beispielsweise durch ein Signalbit gebildet sein, dessen Binärwert die Richtung des jeweiligen Polaritätswechsels angibt. Ein Adressensignal kann dagegen eine Mehrzahl von Signalbits aufweisen, deren Binärwertkombination eine eine Anschlußleitung bezeichnende Adresse in codierter Form darstellt. Das Einschreiben der gerade genannten Richtungssignale und Adressensignale in eine nicht bereits durch derartige Signale belegte Speicherzelle des Notizblockes erfolgt im übrigen über einen mit DB bezeichneten Datenbus auf eine Ansteuerung der betreffenden Speicherzelle hin. Die Ansteuerung erfolgt dabei mit Hilfe einer die betreffende Speicherzelle bezeichnenden Adresse, die über einen Adressenbus AB von der genannten Programmsteuereinheit PE bereitgestellt wird.

Mit den die Adsressensignale führenden Leitungen des Datenbusses DB ist ein Decoder DEC mit seinen Eingängen verbunden. Dieser Decoder, der von der Programmsteuereinheit PE her über die Leitung SL aktivierbar ist, weist eine der Anzahl der mit der Daten- und Fernschreibvermittlungsanlage EDS verbundenenen Anschlußleitungen entsprechende Anzahl von diesen Anschlußleitungen zugeordneten Ausgängen auf.

Bei Auftreten von Adressensignalen auf den genannten Leitungen des Datenbusses im aktivierten Zustand des Decoders erhält dabei jeweils immer nur derjenige Ausgang ein Ausgangssignal zugeführt, welcher der durch das jeweilige Adressensignal bezeichneten Anschlußleitung zugeordnet ist.

Die Ausgänge des Decoders DEC sind jeweils mit einem Zählregister verbunden. Entsprechend der ihnen zugeordneten Anschlußleitungen sind diese Zählregister mit Z1 bis Zn bezeichnet. Sie sind von der genannten Programmsteuereinheit PE her über eine Rücksetzleitung RL in einen vorgegebenen Anfangszählerstand, beispielsweise den Zählerstand "0", rücksetzbar und erhalten die gerade genannten Ausgangssignale als Zählsignale zugeführt. Die Ausgänge der Zählregister sind jeweils mit einem Eingang eines eine der Anzahl der Zählregister entsprechende Anzahl von Eingängen aufweisenden ODER-Gliedes G verbunden, welches ausgangsseitig mit der Programmsteuereinheit PE in Verbindung steht.

Nachdem zuvor der Aufbau der in der Zeichnung dargestellten Daten- und Fernschreibvermittlungsanlage erläutert worden ist, wird nunmehr auf die Wirkungsweise dieser Anlage im Hinblick auf die Überwachung der Anschlußleitungen AL1 bis ALn näher eingegangen.

Bei der polaritätswechselweisen Übertragung von Datensignalen sind zwei Übertragungsphasen zu unterscheiden. In einer ersten Phase, der Verbindungsaufbauphase, werden den auf den in einen Verbindungsaufbau einbezogenen Anschlußleitungen auftretenden Polaritätswechseln entsprechende Signale vor ihrer Verarbeitung durch die Daten- und Fernschreibvermittlungsanlage zunächst in das obengenannte Wartefeld, d. h. in den Notizblock NB, übernommen. Für in dieser Phase befindliche Anschlußleitungen ist jeweils ein Freigabesignal F in der jeweils zugeordneten Speicherzelle des Datenspeichers LB gespeichert.In der zweiten Phase, der Verbindungsphase, erfolgt dagegen die Übertragung von Polaritätswechseln ohne Einbeziehung des Notizblockes ausschließlich über die Leitungsanschlußeinheit LE. Diese in der zweiten Phase vorgesehene Übertragungsart ist in der bereits oben genannten "Siemens-Zeitschrift" näher dargestellt. Da die Daten- und Fernschreibvermittlungsanlage, insbesondere aber die in ihr vorhandene Programmsteuereinheit PE, im wesentlichen durch die Abarbeitung des Notizblockes belastet ist, wird im folgenden ausschließlich auf die Übertragung von Polaritätswechseln in der Verbindungsaufbauphase eingegangen.

Aus den auf den Anschlußleitungen auftretenden Polaritätswechseln wird in der Leitungsanschlußeinheit LE jeweils ein bereits oben erwähntes, aus einem Richtungssignal und einem Adressensignal bestehendes Signal abgeleitet. Diese Signale werden in der Reihenfolge ihres Auftretens am Ausgang der Leitungsanschlußeinheit in eine freie Speicherzelle des Notizblockes NB übernommen, und zwar auf eine Ansteuerung des Notizblockes durch die Programmsteuereinheit PE hin. Bei diesem Notizblock kann es sich im übrigen um einen umlaufend adressierbaren Schreib-/Lesespeicher handeln, dessen Schreib-und Lesezyklen in bekannter Weise durch Schreibadressen bzw. durch Leseadressen anzeigende Schreibzeiger und Lesezeiger gesteuert werden.

Der Inhalt des Notizblockes NB wird von der Programmsteuereinheit PE her jeweils während zyklisch wiederholt auftretender Bearbeitungsintervalle, die z. B. im ms-Bereich liegen können, abgearbeitet. Für diese Abarbeitung werden die in den einzelnen Speicherzellen des Notizblockes gespeicherten Richtungssignale und Adressensignale für ihre weitere Verarbeitung durch die Daten- und Fernschreibvermittlungsanlage nacheinander ausgelesen. Dabei decodiert der während jedes der Bearbeitungsintervalle aktivierte Decodierer DEC die auf dem Datenbus DB auftretenden Adressensignale und gibt an die jeweils durch die Adressensignale bezeichneten Zählregister (Z1 bis Zn) die bereits genannten Zählsignale ab. Diese Zählregister weisen jeweils zu Beginn eines Bearbeitungsintervalls einen Anfangszählerstand auf, der, wie oben angegeben, beispielsweise der Zählerstand "0" sein möge. Diese Anfangszählerstände werden durch ein von der Programmsteuereinheit PE her gesteuertes Rücksetzen der Zählregister Z1 bis Zn zu Beginn eines Bearbeitungsintervalls oder am Ende des jeweils unmittelbar vorangegangenen Bearbeitungsintervalls eingestellt.

Ausgehend von den gerade genannten Anfangszählerständen zählen die Zählregister innerhalb eines Bearbeitungsintervalls maximal bis zu einem individuell vorgegebenen Endzählerstand. Die einzelnen Endzählerstände sind dabei jeweils so festgelegt, daß durch sie ein Überschreiten einer Anzahl von Richtungssignalen angezeigt ist, die der aufgrund der für die Übertragung von Datensignalen benutzten Übertragungsgeschwindigkeit während einer einem Bearbeitungsintervall entsprechenden Zeitspanne maximal auftretenden Anzahl von Polaritätswechseln entspricht. Bei Erreichen eines solchen Endzählerstandes gibt das jeweilige Zählregister ein Störungen auf der diesem Zählregister zugeordneten Anschlußleitung anzeigendes Signal über das genannte ODER- Glied G an die Programmsteuereinheit PE ab. Diese veranlaßt dann auf ein solches Signal hin das Löschen des in dem Datenspeicher LB für die in Frage kommende Anschlußleitung gespeicherte Freigabesignal. Damit ist dann die Aufnahme weiterer Polaritätswechseln entsprechender Signale für die betreffende Anschlußleitung unterbunden. Für diese Anschlußleitung können anschließend Maßnahmen zur Behebung der Störungen eingeleitet werden.

Durch die vorstehend erläuterte, innerhalb der einzelnen Bearbeitungsintervalle wiederholt durchgeführte leitungsindividuelle Ermittlung der Anzahl der innerhalb eines Bearbeitungsintervalls auftretenden Richtungssignale ist in der Daten- und Fernschreibvermittlungsanlage EDS mit einem geringen Steuerungsaufwand einerseits das rechtzeitige Erkennen von gestörten Anschlußleitungen sichergestellt. Andererseits wird aber auch eine Beeinträchtigung des Betriebs der Daten- und Fernschreibvermittlungsanlage durch gestörte Anschlußleitungen unterbunden.

Obwohl die für die erläuterte Überwachung von Anschlußleitungen in der Programmsteuereinheit PE ablaufenden Steuerungsvorgänge diese zusätzlich nur gering belasten, kann es dennoch zuweilen wünschenswert sein, die dynamische Belastung der Programmsteuereinheit PE zu reduzieren. Dies kann beispielsweise dadurch erfolgen, daß die erläuterten Steuerungsvorgänge in der Speichereinheit SE und in der Programmsteuereinheit PE innerhalb eines Bearbeitungsintervalls nur dann ablaufen, wenn nach Beendigung des diesem Bearbeitungsintervall unmittelbar vorangehenden Bearbeitungsintervalls eine festgelegte Anzahl von Richtungssignalen in den Notizblock aufgenommen worden ist. Die Ermittlung dieser Anzahl kann dabei beispielsweise mittels einer gesonderten, am Ende eines Bearbeitungsintervalls in ihren Anfangszählerstand rücksetzbaren Zählvorrichtung erfolgen.

Abweichend von dem zuvor erläuterten Ausführungsbeispiel kann die leitungsindividuelle Ermittlung der Anzahl von auf Anschlußleitungen auftretenden Polaritätswechseln auch innerhalb der Leitungsanschlußeinheit LE erfolgen. In diesem Falle können beispielsweise den Anschlußleitungen individuell zugeordnete, den in der Zeichnung dargestellten Zählregistern entsprechende Zählregister vorgesehen sein, die jeweils die Anzahl der in vorgegebenen Zeitspannen auftretenden Polaritätswechsel ermitteln und jeweils bei Erreichen eines festgelegten Zählerstandes die Aufnahme weiterer Polaritätswechsel für die zugehörige Anschlußleitung verhindern.

Abschließend sei noch darauf hingewiesen, daß das Verfahren gemäß der vorliegenden Erfindung zwar am Beispiel einer Daten- und Fernschreibvermittlungsanlage erläutert worden ist. Die Anwendung dieses Verfahrens ist jedoch nicht auf derartige Anlagen beschränkt. Vielmehr ist das Verfahren gemäß der vorliegenden Erfindung allgemein in Datenübertragungseinrichtungen anwendbar, die auf mit ihnen verbundenen Anschlußleitungen auftretende Datensignale polaritätswechselweise verarbeiten. Dabei sind unter Datensignalen Digitalsignale zu verstehen, die in codierter Form Daten, Textinformationen oder Sprachinformationen enthalten. Zu derartigen Datenübertragungseinrichtungen gehören beispielsweise neben den bereits genannten Vermittlungsanlagen Multiplexeinrichtungen, Konzentratoren und Datenfernübertragungssysteme.

**Patentansprüche**

1. Verfahren zum Überwachen von mit einer Datenvermittlungs- bzw. Datenübertragungseinrichtung (EDS) verbundenen Anschlußleitungen (AL1 bis ALn) hinsichtlich des Auftretens von bei einer Übertragung von Datensignalen als zusätzliche Polaritätswechsel sich auswirkenden Störungen in der betreffenden Datenvermittlungs- bzw. Datenübertragungseinrichtung,wobei das Überwachen in periodischen Zeitabständen während einer Zeitspanne vorgegebenen Dauer leitungsindividuell erfolgt und bei Vorliegen von Störungen die jeweilige Anschlußleitung in einen den Betrieb der Datenvermittlungs- bzw. Datenübertragungseinrichtung nicht störenden Zustand überführt wird,
**dadurch gekennzeichnet,**

daß für eine innerhalb der Datenvermittlungs- bzw. Datenübertragungseinrichtung (EDS) vorgesehene polaritätswechselweise Übertragung von auf den Anschlußleitungen auftretenden Datensignalen jedem der auf den Anschlußleitungen (AL1 bis ALn) auftretenden Polaritätswechsel ein dessen Richtung angebendes Richtungssignal (P) und ein die jeweilige Anschlußleitung bezeichnendes Adressensignal (ILN) zugeordnet wird,

daß die Richtungssignale zusammen mit ihren zugehörigen Adressensignalen vor ihrer weiteren Verarbeitung durch die Datenvermittlungs- bzw. Datenübertragungseinrichtung zunächst in ein zentrales Wartefeld vorgegebener Größe übernommen werden, dessen Inhalt jeweils während zyklisch wiederholt auftretender Bearbeitungsintervalle abgearbeitet wird,

daß innerhalb eines Bearbeitungsintervalls die Anzahl der in dem Wartefeld befindlichen Richtungssignale anhand der diesen beigefügten Adressensignale leitungsindividuell ermittelt wird,

daß für jede der Anschlußleitungen eine maximale Anzahl von Richtungssignalen festgelegt ist, die der maximal möglichen Anzahl von Polaritätswechseln während einer einem Bearbeitungsintervall entsprechenden Zeitspanne bei einer störungsfreien Übertragung von Datensignalen mit der auf der jeweiligen Anschlußleitung benutzten Übertragungsgeschwindigkeit entspricht,

und daß bei Überschreiten der für die jeweilige Anschlußleitung festgelegten maximalen Anzahl von Richtungssignalen durch die gerade für die jeweilige Anschlußleitung ermittelte Anzahl von Richtungssignalen die Aufnahme weiterer, der jeweiligen Anschlußleitung zugeordneter Richtungssignale verhindert wird.

2. Verfahren nach Anspruch 1,
   **dadurch gekennzeichnet,**
   daß die Anzahl der in dem Wartefeld sich befindenden Richtungssignale nur dann im Zuge eines Bearbeitungsintervalls leitungsindividuell ermittelt wird, wenn nach Beendigung des diesem Bearbeitungsintervall unmittelbar vorangegangenen Bearbeitungsintervalls eine festgelegte Anzahl von Richtungssignalen in das Wartefeld aufgenommen worden ist.

3. Schaltungsanordnung zum Überwachen von mit einer Datenvermittlungs- bzw. Datenübertragungseinrichtung (EDS) verbundenen Anschlußleitungen (AL1 bis ALn) hinsichtlich des Auftretens von bei einer Übertragung von Datensignalen als zusätzliche Polaritätswechsel sich auswirkenden Störungen zur Durchführrung des Verfahrens nach Anspruch 1 oder 2,
**dadurch gekennzeichnet,**
daß als Wartefeld eine erste Speicheranordnung (NB) mit einer der Größe des Wartefeldes entsprechenden Anzahl von Speicherzellen vorgesehen ist, in welche jeweils zumindest ein Richtungssignal zusammen mit dem diesem zugehörigen Adressensignal einschreibbar ist,

daß eine zweite Speicheranordnung (LB) mit den Anschlußleitungen individuell zugeordneten Speicherzellen für die Aufnahme jeweils eines Freigabesignals vorgesehen ist, dessen Vorhandensein das Einschreiben von der jeweiligen Anschlußleitung zugeordneten Richtungssignalen und Adressensignalen in die erste Speicheranordnung (NB) gestattet,

daß eine Zähleranordnung (DEC, Z1 bis Zn, G) mit den Anschlußleitungen individuell zugeordneten Zählregistern (Z1 bis Zn) vorgesehen ist, welche zu Beginn eines Bearbeitungsintervalls einen festgelegten Anfangszählerstand aufweisen und jeweils auf eine innerhalb des jeweiligen Bearbeitungsintervalls erfolgende zyklische Ansteuerung der der ersten Speicheranordnung (NB) zugehörigen Speicherzellen hin bei Auftreten jedes ihre zugeordnete Anschlußleitung bezeichnenden Adressensignals ihren Zählerstand, ausgehend von dem Anfangszählerstand, verändern,

daß für jedes der Zählregister nach Maßgabe der für die Übertragung von Datensignalen auf der jeweiligen Anschlußleitung benutzten Übertragungsgeschwindigkeit individuell ein Endzählerstand derart festgelegt ist, daß durch diesen ein Überschreiten der bei einer störungsfreien Übertragung von Datensignalen während einer einem Bearbeitungsintervall entsprechenden Zeitspanne maximal auftretenden Anzahl von Adressensignalen für die jeweilige Anschlußleitung angezeigt ist,

und daß die Zählregister (Z1 bis Zn) bei Erreichen ihres festgelegten Endzählerstandes jeweils das Löschen des für ihre zugeordnete Anschlußleitung in der zweiten Speicheranordnung (LB) gespeicherten Freigabesignals bewirken.

**Claims**

1. Method for monitoring subscriber lines (AL1 to ALn) connected to a data switching or data transmission device (EDS) with respect to the occurrence of disturbances in the respective data switching or data transmission device that have the effect of additional polarity changes during a transmission of data signals, in which the monitoring is carried out for each specific line at periodic time intervals during a period of predetermined duration and if disturbances are present the respective subscriber line is caused to assume a state that does not interfere with the operation of the data switching or data transmission device, characterised in that, for an alternating polarity transmission of data signals occurring on the subscriber lines provided within the data switching or data transmission device (EDS), there is assigned to each of the polarity changes occurring on the subscriber lines (AL1 to ALn) a direction signal (P) indicating the direction thereof and an address signal (ILN) specifying the respective subscriber line, in that the direction signals together with their associated address signals are first of all transferred, before their further processing by the data switching or data transmission device, into a central queuing field of predetermined size, the contents of which are processed in each case during cyclically repeating processing intervals, in that, within one processing interval, the number of direction signals present in the queuing field is calculated for each specific line on the basis of the address signals appended thereto, in that there is defined for each of the subscriber lines a maximum number of direction signals which corresponds to the maximum possible number of polarity changes during a period corresponding to one processing interval in the case of a disturbance-free transmission of data signals at the signalling rate used on the respective subscriber line, and in that when the number of direction signals just calculated for the respective subscriber line exceeds the maximum number of direction signals defined for the respective subscriber line, the storage of further direction signals assigned to the respective subscriber line is prevented.

2. Method according to Claim 1, characterised in that the number of direction signals present in the queuing field is only calculated for each specific line in the course of a processing interval if a defined number of direction signals has been stored in the queuing field after the end of the processing interval immediately preceding this processing interval.

3. Circuit arrangement for monitoring subscriber lines (AL1 to ALn) connected to a data switching or data transmission device (EDS) with respect to the occurrence of disturbances that have the effect of additional polarity changes during a transmission of data signals for carrying out the method according to Claim 1 or 2, characterised in that there is provided as queuing field a first memory arrangement (NB) having a number of memory cells corresponding to the size of the queuing field, into which it is possible to write in each case at least one direction signal together with its associated address signal, in that a second memory arrangement (LB) having memory cells assigned individually to the subscriber lines is provided for the storage of in each case one enable signal, the presence of which permits the writing of direction signals and address signals assigned to the respective subscriber line into the first memory arrangement (NB), in that a counter arrangement (DEC, Z1 to Zn, G) having counter registers (Z1 to Zn) assigned individually to the subscriber lines is provided, which counter registers have a defined initial count at the beginning of a processing interval and alter their count, starting from the initial count, in each case following a cyclical addressing of the memory cells associated with the first memory arrangement (NB) carried out within the respective processing interval upon the appearance of each address signal specifying their assigned subscriber line, in that a final count is defined individually for each of the counter registers, in accordance with the signalling rate used for the transmission of data signals on the respective subscriber line, in such a way that said final count indicates an exceeding of the maximum number of address signals for the respective subscriber line occurring during a period corresponding to one processing interval in the case of a disturbance-free transmission of data signals, and in that, when they reach their defined final count, the counter registers (Z1 to Zn) effect in each case the erasure of the enable signal stored in the second memory arrangement (LB) for their assigned subscriber line.

**Revendications**

1. Procédé pour contrôler des lignes d'abonnés (AL1 à ALn) raccordées à une installation de commutation ou de transmission de données (EDS), en rapport avec l'apparition de perturbations qui se manifestent, dans l'installation considérée de commutation ou de transmission de données sous la forme d'un changement supplémentaire de polarité lors de la transmission de signaux de données, et selon lequel le contrôle est exécuté pour chaque ligne à des intervalles de temps périodiques, pendant un intervalle de temps de durée prédéterminée et, dans le cas de la présence de perturbations, la ligne d'abonné respective est commutée dans un état ne perturbant pas le fonctionnement de l'installation de commutation ou de transmission de données,
caractérisé par le fait

que pour la transmission à polarité alternée,
prévue dans l'installation de commutation ou
de transmission de données (EDS), de signaux
de données apparaissant dans les lignes
d'abonnés, à chaque changement de polarité
qui apparaît dans les lignes d'abonnés (AL1 à
ALn), sont associés un signal de direction (P)
indiquant la direction de ce changement et un
signal d'adresse (ILN) désignant la ligne
d'abonné respective,

que les signaux de direction ainsi que les
signaux d'adresses, qui leur sont associés,
sont transférés, avant la poursuite de leur traitement par l'installation de commutation ou de
transmission de données, tout d'abord dans
une zone d'attente centrale ayant une taille
prédéterminée et dont le contenu est traité
respectivement pendant des intervalles de traitement apparaissant cycliquement de façon répétée,

que pendant un intervalle de traitement, le
nombre des signaux de direction situés dans la
zone d'attente est déterminé, pour chaque ligne, sur la base des signaux d'adresses adjoints à ces signaux de direction,

que pour chacune des lignes d'abonnés est
fixé un nombre maximum de signaux de direction, qui correspond au nombre maximum possible de changement de polarité pendant un
intervalle de temps correspondant à un intervalle de traitement, dans le cas d'une transmission non perturbée de signaux de données avec la vitesse de transmission utilisée
dans la ligne d'abonné respective,

et que lorsque le nombre de signaux de direction, déterminé précisément pour la ligne
d'abonné respective, dépasse le nombre maximum de signaux de direction, fixé pour la ligne
d'abonné respective, la réception d'autres signaux de direction associés à la ligne d'abonné respective, est bloquée.

2. Procédé suivant la revendication 1, caractérisé
par le fait

que le nombre des signaux de direction situés
dans la zone d'attente est déterminé, pour
chaque ligne, au cours d'un intervalle de traitement uniquement lorsqu'à la fin de l'intervalle
de traitement qui précède directement cet intervalle de traitement, un nombre fixé de signaux de direction a été reçu dans la zone
d'attente.

3. Montage pour contrôler des lignes d'abonnés
(AL1 à ALn) raccordées à une installation de
commutation ou de transmission de données
(EDS), pour ce qui concerne l'apparition de
perturbations se manifestant sous la forme
d'un changement supplémentaire de polarité
lors de la transmission de signaux de données,
pour la mise en oeuvre du procédé suivant la
revendication 1 ou 2, caractérisé par le fait

qu'il est prévu, comme zone d'attente, un premier dispositif de mémoire (NB) possédant un
nombre, qui correspond à la taille de la zone
d'attente, de cellules de mémoire dans lesquelles peuvent être enregistrés respectivement au moins un signal de direction ainsi que
le signal d'adresse associé à ce signal de
direction,

qu'il est prévu un second dispositif de mémoire (LB) possédant des cellules de mémoire
associées individuellement aux lignes d'abonnés, pour la réception respectivement d'un signal de libération, dont la présence permet
l'enregistrement de signaux de direction et de
signaux d'adresses, associés à la ligne d'abonné respective, dans le premier dispositif de
mémoire (NB),

qu'il est prévu un dispositif de comptage
(DEC, Z1 à Zn, G) qui comporte des registres
de comptage (Z1 à Zn) associés individuellement aux lignes d'abonnés et possède, au
début d'un intervalle de traitement, un état de
comptage initial fixé et dont l'état de comptage
varie, à partir de l'état de comptage initial,
respectivement lors d'une commande cyclique,
exécutée pendant l'intervalle de traitement respectif, des cellules de mémoire associées au
premier dispositif de mémoire (NB), lors de
l'apparition de chaque signal d'adresse désignant la ligne d'abonné qui leur est associée, que pour chacun des registres de comptage,
un état de comptage final est fixé individuellement en fonction de la vitesse de transmission
utilisée pour la transmission de signaux de
données dans la ligne d'abonné respective, de
telle sorte que cet état de comptage final indique un dépassement du nombre de signaux
d'adresses pour la ligne respective d'abonné,
qui apparaît au maximum pendant un intervalle
de temps correspondant à un intervalle de
traitement, lors d'une transmission non perturbée de signaux de données,

et que les registres de comptage (Z1 à Zn)
réalisent respectivement, lorsque l'état de
comptage final qui leur est fixé est atteint,
l'effacement du signal de libération mémorisé
pour la ligne d'abonné qui leur est associée,
dans le second dispositif de mémoire (LB).